# EUROPÄISCHE PATENTSCHRIFT

(11) **EP 1 490 448 B1**
(45) Veröffentlichungstag und Bekanntmachung des Hinweises auf die Patenterteilung: **30.05.2007**
(21) Anmeldenummer: 03709776.3
(22) Anmeldetag: 12.03.2003
(51) Int. Cl.: C09D 175/06, C08G 63/668, C08G 18/42, C08G 63/48, C09D 175/04, C08G 18/70, C08G 18/40, C08G 18/62, C04B 41/48, C08G 18/66, C08G 18/08, C08G 18/44, C08G 18/12, C08G 18/78, C08F 265/04, C08F 265/06, C09D 151/00, C08J 3/03, C08G 18/46, C08L 75/04, C08J 3/00

(54) **WÄSSRIGE 2K-PUR-SYSTEME**
AQUEOUS TWO-COMPONENT POLYURETHANE SYSTEMS
SYSTEMES PUR A DEUX COMPOSANTES AQUEUX

(30) Priorität: 25.03.2002 DE 10213229
(43) Veröffentlichungstag der Anmeldung: 29.12.2004
(73) Patentinhaber: Bayer MaterialScience AG, 51368 Leverkusen (DE)
(72) Erfinder: PROBST, Joachim, 51145 Köln (DE); MELCHIORS, Martin, 42799 Leichlingen (DE); RUTTMANN, Gerhard, 51399 Burscheid (DE); STINGL, Thomas, 56410 Montabaur (DE); OTTENSMANN, Hartmut, 40221 Düsseldorf (DE)
(86) Internationale Anmeldenummer: PCT/EP2003/002531
(87) Internationale Veröffentlichungsnummer: WO 2003/080752

(56) Entgegenhaltungen:
- EP-A- 1 065 228
- WO-A-00/37522
- WO-A-02/20638
- WO-A-02/31021
- WO-A-99/01491
- WO-A-99/21904
- DE-A- 10 006 539
- US-A- 6 017 998
- US-A1- 2001 040 008

## Beschreibung

Die Erfindung betrifft wässrige Zweikomponenten-Polyurethan-Systeme enthaltend mit Reaktiwerdünnern modifizierte Vinylpolymerpolyoldispersionen, ein Verfahren zu deren Herstellung und Verwendung als Lacke.

Wässrige Zweikomponenten(2K)-Polyurethan(PUR)-Systeme sind im Stand der Technik hinreichend beschrieben worden, z.B. in der EP-A 0 358 979, der EP-A 0 496 210 und der EP-A 0 557 844, wobei sowohl sogenannte Sekundärdispersionen als auch sogenannte Primärdispersionen als Polyolkomponenten zum Einsatz kommen, die mit geeigneten Polyisocyanaten kombiniert werden.

Unter dem Begriff "Sekundärdispersionen" werden solche wässrigen Dispersionen verstanden, die zunächst im homogenen organischen Medium polymerisiert werden und danach unter Neutralisation im Allgemeinen ohne Zusatz externer Emulgatoren im wässrigen Medium umdispergiert werden. Unter dem Begriff "Primärdispersionen" werden Polyoldispersionen verstanden, die direkt in wässriger Phase nach dem Verfahren der Emulsionspolymerisation hergestellt werden. In dieser Art Verfahren ist der Einsatz externer Emulgatoren, die eine elektrostatische oder eine sterische Stabilisierung bewirken, meist erforderlich.

Sehr gut geeignet als physikalisch schnell trocknende wässrige 2K-PUR-Systeme sind z.B. solche, die Primärdispersionen als Polyolkomponenten enthalten. Diese Polyolkomponenten weisen Molgewichtswerte von Mₙ deutlich größer 5000 g/mol und M_{w}-Werte von meist größer 30000 g/mol auf. Diese Primärdispersionen lassen sich im Allgemeinen nur mit (teil)hydrophilierten Polyisocyanaten kombinieren, wodurch eine relativ unkomplizierte Dispergierung mit einfacheren Rühraggregaten oder per Hand und Glasstab möglich wird (z.B. in der EP-A 0 557 844). Zusätzlich enthalten solche wässrigen 2K-PUR-Systeme üblicherweise relativ hohe Konzentrationen an organischen Colösemitteln, die als Koaleszenzhilfsmittel bei der Filmbildung auf den oben genannten Substraten wirken. Trägt man nun solche wässrigen, colöserhaltigen 2K-PUR-Systeme als Beschichtungen, beispielsweise auf mineralische Untergründe, wie z.B. Fußböden als Substrat auf, dann erhält man zwar Lacke mit einem sehr guten Verlauf, relativ hohen Glanzgraden und geringen Haze-Werten, die flüchtigen organischen Verbindungen (VOC) führen jedoch zu einer starken Beeinträchtigung der Umwelt bis hin zu gesundheitlichen Belastungen.

Oligo- oder Polyetherpolyolen sind als sogenannte Reaktivverdünner in wässrigen Vinylpolymerisatdispersionen ebenfalls aus dein Stand der Technik bekannt. So wird beispielsweise in der EP-A 0 557 844 beschrieben, dass die dort in einem wässrigen 2K-PUR-System eingesetzten Polyvinylpolyoldispersionen des Primärdispersionstyps noch zusätzlich bis zu 10 Gew.-% bezogen auf das Gesamtgewicht der Polymerisatharze an wasserlöslichen mehrwertigen Alkoholen wie beispielsweise Ethylenglykol, Propylenglykol, Glycerin, Trimethylolpropan oder die niedermolekularen, wasserlöslichen Alkoxylierungsprodukte derartiger mehrwertiger Alkohole enthalten können.

In der EP-A 0 758 007 werden wässrige, vernetzbare Bindemitteldispersionen A) mit niedrigem Lösemittelgehalt offenbart, die mindestens einen hydroxyfunktionellen Polyether A1) und ein zweistufig aus einer relativ hydrophoben Komponente A2) und einer relativ hydrophilen Komponente A3) aufgebautes hydroxyfunktionelles Vinylpolymerharz enthalten. Diese hydroxyfunktionellen Vinylpolymerisate sind Sekundärdispersionen, die im homogenen organischen Medium in Gegenwart von niedermolekularen, flüchtigen Lösungsmitteln und den genannten hydroxyfunktionellen Polyethern A1) durch radikalische Polymerisation hergestellt und anschließend in einer wässrigen Phase zusammen mit Neutralisationsmitteln dispergiert werden. Die destillative Entfernung der organischen Colösemittel aus diesen Bindemitteldispersionen ist zwar grundsätzlich möglich, bei der Beschichtung von Substraten wird jedoch der zusätzliche Einsatz von Colösemitteln in den Bindemittel/Vernetzer-Systemen als Hilfsmittel für eine bessere Verträglichkeit der Komponenten (Bindemittel und Vernetzer) sowie für eine bessere Filmbildung als unvermeidbar angesehen.

Aufgabe der vorliegenden Erfindung bestand somit in der Bereitstellung von Polyoldispersionen als Bindemitttel für wässrige 2K-PUR-Systeme, bei denen eine zusätzliche Zugabe von Colösern nicht notwendig ist und diese als Lacke für beliebige Substrate einsetzbar sind.

Es wurde überraschenderweise gefunden, dass beim Einsatz hydroxyfunktioneller Vinylpolymerisate des Primärdispersionstyps zusammen mit hydroxyfunktionellen, hydrophoben, also wasserunlöslichen Polyethern und unverkappten Polyisocyanaten als Vernetzern keine flüchtigen Colösemittel in wässrigen 2K-PUR-Systemen mehr nötig sind, um eine gute Verträglichkeit zwischen der Polyol- und der Polyisocyanatkomponente sowie eine ausgezeichnete Filmbildung nach Applikation des 2K-PUR-Systems zu erreichen.

Gegenstand der Erfindung ist ein Verfahren zur Herstellung wässriger Zweikomponenten-Polyurethan-Systeme, dadurch gekennzeichnet, dass in einem ersten Schritt eine Polyolkomponente a), aufgebaut aus einem hydrophoben Kern-Polymerisat mit einer Glastemperatur von 40° bis 100°C, bevorzugt 40° bis 80°C, auf welchem ein hydrophiles Schalen-Polymerisat mit einer Glastemperatur von -100° bis + 25°C, bevorzugt -50° bis + 20°C, mittels Emulsionspolymerisation in wässriger Phase aufgepfropft ist, hergestellt wird und eine hydroxylgruppenhaltige Polyetherkomponente b) vor, während oder nach der Polymersisation der Komponente a) zugegeben und anschließend in einem zweiten Schritt eine Polyisocyanatkomponente c) zugemischt wird.

Bevorzugt wird in dem erfindungsgemäßen Verfahren kein Colöser zugesetzt.

Bei der Polyolkomponente a) handelt es sich um hydroxyfunktionelle Copolymerisate des Hydroxylzahlbereichs von 10 bis 264 mg KOH/g Festharz, bevorzugt 30 bis 150 mg KOH/g Festharz des Säurezahlbereichs von 3 bis 55 mg KOH/g Festharz, bevorzugt 4 bis 30 mg KOH/g Festharz, wobei sich die Säurezahl sowohl auf freie, nicht neutralisierte Säuregruppen als auch auf neutralisiert vorliegende Säuregruppen bezieht. Geeignete Säuregruppen sind z.B. Carboxyl- und/oder Sulfonsäuregruppen. Bevorzugt sind Carboxyl- bzw. Carboxylatgruppen. Der Gehalt an chemisch gebundenen Carboxylat- und/oder Sulfonatgruppen liegt im Bereich von 5 bis 98, bevorzugt 7 bis 53 Milliäquivalenten pro 100 g Feststoff.

Die Polyolkomponente a) weist im Allgemeinen ein nach der Methode der Gelpermeationschromatographie unter Verwendung von Polystyrol als Standard ermittelbares Molekulargewicht Mₙ von 5 000 bis 300 000, bevorzugt von 10 000 bis 200 000 und ein Molekulargewicht M_{w} von 30 000 bis 2 000 000, bevorzugt von 40 000 bis 500 000 g/mol auf. Bei diesen Molgewichtsbestimmungen werden vernetzte Polymeranteile, z.B. Mikrogele, nicht berücksichtigt.

Die Polyolkomponente a) enthält
A) 0,5 bis 7 Gew.-%, bevorzugt 0,5 bis 5 Gew.-% , besonders bevorzugt 0,7 bis 3,0 Gew.-% Acrylsäure und/oder Methacrylsäure,
B) 5 bis 75 Gew.-%, bevorzugt 20 bis 70 Gew.-%, besonders bevorzugt 30 bis 60 Gew.-% Methylmethacrylat und/oder Styrol,
C) 3 bis 40 Gew.-%, bevorzugt 10 bis 40 Gew.-%, besonders bevorzugt 20 bis 30 Gew.-% eines' oder mehrerer C₁₋₈-Alkylacrylate und/oder C₂₋₈-Alkylinethacrylate,
D) 2 bis 74 Gew.-%, bevorzugt 5 bis 50 Gew.%, besonders bevorzugt 10 bis 30 Gew.-% eines oder mehrerer monohydroxyfunktioneller Alkylacrylate und/oder Alkylmethacrylate,
E) 0 bis 30 Gew.-%, bevorzugt 0 bis 15 Gew.%, besonders bevorzugt 0 Gew.-% anderer olefinisch ungesättigter Monomerer,
wobei die Summe der Komponenten 100 Gew.-% ergibt.

Als C₁₋₈-Alkylacrylate C) kommen beispielsweise Methylacrylat, Ethylacrylat, n-Propylacrylat, iso-Propylacrylat, n-Butylacrylat, iso-Butylacrylat, tert.-Butylacrylat, n-Hexylacrylat, n-Octylacrylat oder 2-Ethylhexylacrylat in Betracht. Bevorzugt sind n-Butylacrylat, n-Hexylacrylat, 2-Ethylhexylacrylat, besonders bevorzugt n-Butyl- und/oder 2-Ethylhexylacrylat.

Geeignete C₂₋₈-Alkylmethacrylate C) sind beispielsweise Ethylmethacrylat, n-Butylmethacrylat und/oder 2- Ethylhexylmethacrylat.

Als hydroxylfunktionelle (Meth)acrylate D) kommen beispielsweise 2-Hydroxyethyl(meth)acrylat, 2-Hydroxypropyl(meth)acrylat, 2-Hydroxyisopropyl-(meth)acrylat, 4-Hydroxybutyl-(meth)acrylat oder beliebige Gemische dieser Monomeren in Betracht. Bevorzugt werden 2-Hydroxyethylmethacrylat und das technische Gemisch aus 2-Hydroxypropyl- und 2-Hydroxyisopropylmethacrylat, allgemein als Hydroxypropylmethacrylat bezeichnet.

Die weiteren Monomerbausteine E) können substituierte Styrolabkömmlinge, wie beispielsweise die isomeren Vinyltoluole, α-Methylstyrol, Propenylbenzol, C₅-C₁₂-Cycloalkyl(meth)acrylate, Isobornyl(meth)acrylat, Vinylester wie Vinylacetat, -propionat bzw. versatat oder Vinylsulfonsäure sein.

Die Herstellung der Polyolkomponente a) erfolgt direkt in wässriger Phase nach dem prinzipiell bekannten Verfahren der Emulsionspolymerisation, wie z.B. in B. Vollmert, "Grundriss der Makromolekularen Chemie", Band 1, S. 181 ff., Vollmert Verlag 1988, Karlsruhe, oder in H. G. Elias, "Makromoleküle", Bd. 2, S. 93 ff, Hüthig & Wepf Verlag Basel, Heidelberg, New York 1992, zusammengefasst.

Als Radikalstarter geeignet sind z.B. Peroxodisulfate, wie Kalium- oder Ammoniumperoxodisulfat. Es können aber auch Redoxsysteme wie z.B. Ammoniumperoxodisulfat/Natriumhydroxymethansulfinat (Rongalit^{®}C, BASF AG, Ludwigshafen) /Eisensulfat oder t-Butylhydroperoxid/Rongalit^{®}C/Eisensulfat als Radikalstarter eingesetzt werden.

Bei der Herstellung der Polyolkomponente a) nach dem Prinzip der Emulsionspolymerisation können auch externe Emulgatoren wie beispielsweise anionische Emulgatoren, z.B. solche auf Alkylsulfat-Basis, Alkylarylsulfonate, Alkylphenolpolyethersulfate, wie z.B. in Houben-Weyl, Methoden der organischen Chemie, Erweiterungs- und Folgebände, 4. Auflage, Band E 20, 1987 (Teil 1, Seiten 259 bis 262) angegeben oder Alkylpolyethersulfate, Sulfosuccinate oder nichtionische Emulgatoren, wie z.B. die Alkoxylierungs- insbesondere Ethoxylierungsprodukte von Alkanolen, Phenolen oder Fettsäuren mitverwendet werden, die im Anschluss an die Herstellung der Polyolkomponente a) in dem erfindungsgemäßen 2K-PUR-System verbleiben und als Hilfs- und Zusatzmittel d) angesehen werden können.

Im Falle des Vorliegens derartiger Emulgatoren genügt oftmals eine bereits sehr geringe Neutralisation der vorliegenden Säuregruppen zur Gewährleistung der Homogenität der Lösungen oder Dispersionen der Polyolkomponente a). Die dennoch zumindest in geringer Konzentration eingesetzten Neutralisationsmittel können dem System bereits während der Emulsionspolymerisation einverleibt werden. Daher kann im Fall von nur geringen Konzentrationen an salzartigen Gruppen die Löslichkeit oder Dispergierbarkeit der Polyolkomponente a) in Wasser durch Mitverwendung von externen Emulgatoren erleichtert werden. Auf jeden Fall muss die Wasserverdünnbarkeit der Copolymerisate entweder als Dispersion oder kolloid- bis molekulardisperse "Lösung" gewährleistet sein.

Das Verfahren zur Herstellung der Polymerpolyolkomponenten a) erfolgt mindestens zweistufig, wobei in der ersten Polymerisationsstufe durch eine radikalisch initiierte Polymerisation ein relativ hart eingestelltes Polymerisat, d.h. mit einer Glastemperatur von 40° bis 100°C, bevorzugt von 40° bis 80°C, als Pfropfgrundlage hergestellt wird, auf die in einer zweiten Polymerisationsstufe ein relativ weich eingestelltes Polymerisat, d.h. mit einer Glastemperatur von -100° bis + 25°C, bevorzugt von -50° bis + 20°C, als Auflage z.B. analog der DE-A 19 858 732, S.3, Z. 30 aufgepfropft wird. Hierbei können sowohl die erste Polymerisationsstufe als auch die zweite Pfropfstufe mit relativ hydrophil eingestellten Monomermischungen (d.h. mit Säuregruppen enthaltenden Comonomeren) durchgeführt werden.

Bevorzugt ist jedoch ein Verfahren, bei dem in wässriger Phase zunächst ein relativ hydrophobes, hart eingestelltes Polymerisat als Pfropfgrundlage, das keine Säuregruppen enthält, durch eine radikalisch initiierte Polymerisation in Gegenwart eines externen Emulgators hergestellt wird, auf die in einer zweiten nachfolgenden Polymerisationsstufe eine hydrophilere, weicher eingestellte Stufe, die Carboxylgruppen enthält, aufgepfropft wird.

Möglich sind auch mehrere hintereinander erfolgende Polymerisationsstufen, wobei die aufeinander folgenden Stufen zu immer hydrophileren sowie zunehmend weicher eingestellten Polymerisaten führen. Möglich ist natürlich auch eine sogenannte Gradientenfahrweise, bei der eine Veränderung der Hydrophilie und der Polymerisathärte (gemessen mittels der Glastemperatur) im Verlauf des Zulaufverfahrens kontinuierlich erfolgt, wie z.B. in der WO-A 98/12230 auf der S. 8, Z. 25 ff beschrieben.

Die einpolymerisiert vorliegenden ungesättigten Säuren A) und gegebenenfalls E) werden nach beendeter Polymerisation mindestens teilweise neutralisiert, so dass die resultierenden anionischen Gruppen die Löslichkeit oder Dispergierbarkeit der Polyolkomponente a) in Wasser gewährleisten. Dabei sollten 5 bis 100 % der einpolymerisiert vorliegenden Säuregruppen in mit aliphatischen Aminen oder mit Ammoniak neutralisierter Form vorliegen.

Zur zumindest teilweisen Neutralisation der einpolymerisiert vorliegenden Säuregruppen kommen Ammoniak oder aliphatische Amine wie beispielsweise Triethylamin, Dimethylethanolamin, Diethylethanolamin, Triethanolamin oder beliebige andere aliphatische Amine des Molekulargewichtsbereichs 31 bis 200 g/mol in Betracht. Bevorzugt werden Amoniak, Triethylamin oder Dimethylethanolamin eingesetzt.

Im Idealfall hat man dann letztendlich ein Kern-Schale-Polymerisat mit einem hydrophoben, relativ harten Kern und einer hydrophilen, relativ weichen Schale vorliegen.

Die in wässrige Phase vorliegende Polyolkomponente a) weist im Allgemeinen Feststoffgehalte von 20 bis 60 Gew.%, bevorzugt von 30 bis 50 Gew.%, pH-Werte von 6 bis 10, bevorzugt von 6,5 bis 8,5, Viskositäten von 5 bis 5000 mPas, bevorzugt von 5 bis 2000 mPas (gemessen bei 23°C und einer Scherrate von 45,4 s⁻¹) und mittlere Teilchendurchmesser von 50 bis 300 nm, bevorzugt von 70 bis 200 nm (gemessen mit Laserkorrelationsspektroskopie) auf.

Geeignete hydroxyfunktionelle Polyether b) weisen OH-Funktionalitäten von 1,8 bis 6,0, bevorzugt 2,0 bis 4,0, OH-Zahlen von 50 bis 700, bevorzugt von 100 bis 600 mg KOH/g Feststoff und Molekulargewichte Mₙ von 106 bis 4 000 g/mol, bevorzugt von 200 bis 3500 auf, wie z.B. Alkoxylierungsprodukte hydroxyfunktioneller Startermoleküle wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente b) sind Polypropylenoxidpolyole mit einem Molekulargewicht von 300 bis 4000 g/mol. Hierbei können die besonders niedermolekularen Polyetherpolyole bei entsprechend hohen OH-Gehalten wasserlöslich sein. Besonders bevorzugt sind jedoch wasserunlösliche Polypropylenoxidpolyole.

Die Polyisocyanatkomponente c) weist eine Viskosität von 5 bis 12000 mPas, bevorzugt 50 bis 10.000 mPas auf und kann hierbei sowohl
c1) hydrophoben, nichthydrophilierten Charakter als auch
c2) hydrophilierten Charakter besitzen.

Wird eine nichthydrophilierte, in Wasser unlösliche oder nicht dispergierbare Polyisocyanatkomponente c1) in dem erfindungsgemäßen Verfahren eingesetzt, ist eine gute Dispergierwirkung nur mittels eines hochwirksamen Dispergieraggregats, z.B. mit einem Düsenstrahldispergator gemäß der EP-A 0 685 544 möglich. Hiermit werden nach der Applikation des Films höchstmögliche Chemikalien- und Wasserfestigkeiten des 2K-PUR-Systems erzielt.

Soll die Polyisocyanatkomponente c) jedoch mit einfacheren Dispergieraggregaten wie z.B. einem Dissolver oder möglicherweise sogar manuell wirksam und feinteilig mit den Polyolkomponenten a) und b) dispergiert werden, so ist eine nichtionische oder eine anionische Hydrophilierung von c) unbedingt erforderlich. Der Einsatz von hydrophilierten Polyisocyanaten c2) oder von Mischungen von c1) mit c2) mit guter Dispergierbarkeit in der wässrigen Phase ist somit bevorzugt.

Als Komponente c) geeignete Polyisocyanate sind insbesondere die sogenannten "Lackpolyisocyanate" mit aromatisch, aliphatisch oder cycloaliphatisch gebundenen Isocyanatgruppen, wobei die aliphatischen oder cycloaliphatischen Polyisocyanate bevorzugt sind.

Als bevorzugte Polyisocyanate c) sind beispielsweise "Lackpolyisocyanate" auf Basis von Hexamethylendiisocyanat oder von 1-Isocyanato-3,3,5-trimethyl-5-isocyanatomethylcyclohexan (IPDI) und/oder Bis(isocyanatocyclohexyl)-methan, insbesondere solche, welche ausschließlich auf Hexamethylendiisocyanat basieren geeignet.

Unter "Lackpolyisocyanaten" auf Basis dieser Diisocyanate sind die an sich bekannten Biuret-, Urethan-, Uretdion-, Allophanat- und/oder Isocyanuratgruppen aufweisenden Derivate dieser Diisocyanate zu verstehen, die im Anschluss an ihre Herstellung in bekannter Weise, bevorzugt durch Destillation von überschüssigem Ausgangsdiisocyanat bis auf einen Restgehalt von weniger als 0,5 Gew.-% befreit worden sind. Bevorzugte aliphatische Polyisocyanate sind Biuretgruppen aufweisende Polyisocyanate auf Basis von Hexamethylendiisocyanat, die aus Gemischen von N,N',N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, die im wesentlichen aus N,N',N"-Tris-(6-isocyanatohexyl)-isocyanurat im Gemisch mit untergeordneten Mengen an seinen höheren Homologen bestehen. Besonders bevorzugt werden entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphinen entstehen. Ganz besonders bevorzugt sind die zuletzt genannten Gemische einer Viskosität bei 23°C von 50 bis 500 mPas und einer zwischen 2,2 und 5,0 liegenden NCO-Funktionalität. Möglich ist aber auch der Einsatz von monomeren Polyisocyanaten wie z.B. 4-Isocyanatomethyl-1,8-octandiisocyanat.

Ebenfalls geeignet sind sog. "Lackpolyisocyanate" auf Basis von 2,4-Diisocyanatotoluol oder dessen technische Gemische mit 2,6-Diisocyanatotoluol oder auf Basis von 4,4'-Diisocyanatodiphenylmethan bzw. dessen Gemische mit seinen Isomeren und/oder höheren Homologen. Derartige aromatische Lackpolyisocyanate sind beispielsweise die Urethangruppen aufweisenden Isocyanate, wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanatoisocyanurate, die ebenfalls im Anschluss an ihre Herstellung vorzugsweise destillativ von überschüssigen monomeren Diisocyanaten befreit worden sind.

Grundsätzlich möglich ist auch die Verwendung von unmodifizierten Polyisocyanaten der beispielhaft genannten Art, falls diese den gemachten Ausführungen bezüglich der Viskosität entsprechen.

Die Polyisocyanatkomponente c) kann im übrigen aus beliebigen Gemischen der beispielhaft genannten Polyisocyanate bestehen.

Bevorzugt ist der Einsatz von hydrophilierten Polyisocyanaten c2), die durch nichtionische und/oder anionische Hydrophilierung der oben genannten hydrophoben Polyisocyanate hergestellt werden können.

Die nichtionische Hydrophilierung der Polyisocyanatkomponente c) erfolgt im Allgemeinen durch Modifizierung eines unmodifizierten hydrophoben Polyisocyanats mit einem Polyethermonoalkohol z.B. gemäß EP-A 0 540 985, S. 3, Z 55 - S. 4 Z. 5 und EP-A 0 959 087, S.3 Z. 39-51.

Eine anionische Hydrophilierung der Komponente c) kann durch Phosphat-, Sulfat- oder Sulfonatgruppen erfolgen. Bevorzugt ist hierbei der Einsatz von Sulfonatgruppen, die im Polyisocyanat in chemisch gebundener Form vorliegen. Diese können z.B. durch die Umsetzung von Polyisocyanaten mit Sulfonatgruppen enthaltenden Verbindungen, die zusätzlich noch mindestens eine gegenüber NCO-Gruppen reaktive Gruppe tragen, hergestellt werden. Beispielhaft hierfür seien Umsetzungsprodukte von Polyisocyanaten mit 3-(Cyclohexylamino)-propansulfonsäure genannt. Die Sulfonsäure- bzw. Sulfonatgruppen können dabei in Mengen von 0,1 bis 5,0 Gew.%, bezogen auf das Polyisocyanat, vorhanden sein.

Prinzipiell möglich ist auch der Einsatz von mischhydrophilierten Polyisocyanaten, wie sie z.B. in der EP-A 0 510 438, S. 2 Z. 56 - S. 3, Z. 5 beschrieben sind. Hierbei erfolgt eine gleichzeitige Hydrophilierung mit nichtionischen Polyethergruppen und anionischen oder potentiell, d.h. zur Ausbildung einer ionischen Gruppe befähigten Gruppe, bevorzugt mit anionischen Carboxylgruppen.

Geeignete Hilfs- und Zusatzmittel d) sind beispielsweise Pigmente, Füllstoffe, Verlaufsmittel, Verdicker, Entschäumer, Entlüfter und dergleichen.

Die Herstellung der erfindungsgemäßen wässrigen Zweikomponenten-Polyurethan-Systeme erfolgt im Allgemeinen durch einfaches Verrühren der Einzelkomponenten a), b) und c) auf manuelle Weise oder durch Rührereinwirkung oder gegebenenfalls bei schwer zu dispergierenden 2K-Systemen mit einem Düsenstrahldispergator, wobei die Mengenverhältnisse so gewählt werden, dass NCO/OH-Äquivalentverhältnisse von 0,2 : 1 bis 5 : 1, bevorzugt 0,7 : 1 bis 3 : 1, resultieren.

Hierbei ist es grundsätzlich möglich, die hydroxylhaltige Polyetherkomponente b) bereits vor oder während der Polymerisation von a) zuzusetzen. Wird die Komponente b) der Polyolkomponente a) schon vor der Polymerisation einverleibt, so erfolgt der Zusatz im Falle einer Emulsionspolymerisation bereits in der wässrigen Vorlage, gegebenenfalls zusammen mit einem anionischen Emulgator.

Bevorzugt wird die Komponente a) mit 1,0 bis 30,0 Gewichts-% des hydroxyfunktionellen Polyethers b) als Reaktivverdünner kombiniert.

Eine bevorzugte Ausführungsform des erfindungsgemäßen Verfahrens besteht darin, dass die Polyetherkomponente b) während der Zulaufpolymerisation von a) eingesetzt wird, an welcher sich dann die Zugabe zum zulaufenden Monomergemisch oder im Falle ausreichender Wasserdispergierbarkeit bzw. -löslichkeit zu der wässrigen zulaufenden Initiatorlösung anschließt. Besonders bevorzugt ist der Einsatz der Polyetherkomponente b) im Monomerzulauf bei der Herstellung der Pfropfauflage des weiter oben beschriebenen Pfropfpolymerisats.

Grundsätzlich möglich ist auch die Zugabe der Polyetherkomponente b) zur Polyolkomponente a) nach beendeter Polymerisation z.B. während der Neutralisation. Diese Verfahrensvariante ist jedoch nur dann sinnvoll, wenn die beiden Polyolkomponenten a) und b) gut miteinander verträglich sind, da es sich in diesem Falle um reine Mischungen aus a) und b) handelt.

Die Verträglichkeit zwischen der Polyisocyanatkomponente c) und der Summe der Polyolkomponenten a) und b) und damit auch die leichtere Dispergierbarkeit des aus diesen Komponenten hergestellten wässrigen 2K-PUR-Systems wird erheblich gesteigert, wenn die Polyisocyanatkomponente c) entweder nichtionisch oder anionisch hydrophiliert worden ist. Bevorzugt ist daher die manuelle Dispergierung oder die Dispergierung mit einfachen Rühraggregaten, wie z.B. einem Dissolver.

Gegenstand der vorliegenden Erfindung sind auch wässrige Zweikomponenten-Polyurethan-Systeme erhältlich nach dem erfindungsgemäßen Verfahren.

Zur Herstellung von Beschichtungsmitteln können den erfindungsgemäßen wässrigen 2K-PUR-Systeme gegebenenfalls weitere Hilfs- und Zusatzmittel d) der Lacktechnologie einverleibt werden. Hierzu gehören beispielsweise auch weitere Mengen an Wasser zwecks Einstellung der geeigneten Verarbeitungsviskosität der erfindungsgemäßen 2K-PUR-Systeme. Die erfindungsgemäßen 2K-PUR-Systeme können somit als Beschichtungsmittel, wie z.B. Lacke oder Klebstoffe verwendet werden.

Ebenfalls Gegenstand der vorliegenden Erfindung sind Beschichtungsmittel enthaltend die erfindungsgemäßen wässrigen 2K-PUR-Systeme.

Im erfindungsgemäßen Verfahren werden keine organischen Lösemittel mit der Harz- oder Härterkomponente oder in der Lackformulierung zugesetzt. Allerdings werden einige handelsübliche Lackhilfs- und Zusatzstoffe gelöst in organischen Lösemitteln angeboten, sodass bei Verwendung solcher Additive geringe Mengen organischer Colöser in die Lacke eingebracht werden. Die erfindungsgemäßen wässrigen Beschichtungsmittel können somit gegebenenfalls weniger als 2 Gew.%, bevorzugt weniger als 1 Gew.%, besonders bevorzugt weniger als 0,5 Gew.% organische Colöser enthalten.

Die Beschichtungsmittel, enthaltend die erfindungsgemäßen 2K-PUR-Systeme, können nach allen technisch üblichen Methoden wie z.B. Spritzen, Tauchen oder Streichen auf beliebige Untergründe wie z.B. Holz, Metall, Kunststoff und mineralische Untergründe sowie aus Kunstharzbeschichtungen auf EP= und PU-Basis als Substrat aufgetragen und bei Temperaturen von 0°C bis 180°C getrocknet werden. Bevorzugt sind Härtungstemperaturen zwischen 15°C und 80°C.

Gegenstand der vorliegenden Erfindung ist weiterhin ein Verfahren zur Herstellung beschichteter Substrate, dadurch gekennzeichnet, dass als Beschichtungsmittel die erfindungsgemäßen 2K-PUR-Systeme eingesetzt werden. Bevorzugte Substrate sind dabei mineralische Untergründe sowie Kunstharzbeschichtungen auf EP- und PU-Basis. Hierbei ist die besonders hohe Beständigkeit der ausgehärteten Lacke gegen wässrige Chemikalien zu beobachten.

Ebenfalls Gegenstand der vorliegenden Erfindung sind Substrate beschichtet mit Beschichtungsmitteln enthaltend die erfindungsgemäßen wässrigen Zweikomponenten-Polyurethan-Systeme.

Die experimentell gefundenen Säurezahlen liegen im Allgemeinen deutlich höher als die den obigen Einbauverhältnissen entsprechenden theoretischen Werten, was sowohl auf hydrolytische Vorgänge als auch auf ionische Gruppen der Emulgatoren und Initiatorbruchstücke zurückgeführt werden kann.

### Beispiel

### Polyisocyanat 1

Isocyanurat- Urethan- und Allophanatgruppen enthaltendendes hydrophiliertes Polyisocyanat auf Basis von 1,6-Diisocyanatohexan (HDI) mit einem NCO-Gehalt von 16,2 % und einer Viskosität (23°C, 100 %ig) von 6800 mPa*s (Bayhydur^{®} VP LS 2336, Bayer AG, Leverkusen, DE).

### Polvisocyanat 2

Isocyanurat- Urethan- und Allophanatgruppen enthaltendendes hydrophiliertes Polyisocyanat auf Basis von 1,6-Diisocyanatohexan (HDI) mit einem NCO-Gehalt von 18,1 % und einer Viskosität (23°C, 100 %ig) von 4500 mPa*s (Bayhydur^{®} VP LS 2319, Bayer AG, Leverkusen, DE)

### Polyisocyanat 3

Isocyanurat- und Urethangruppen enthaltendendes hydrophiliertes Polyisocyanat auf Basis von 1,6-Diisocyanatohexan (HDI) mit einem NCO-Gehalt von 17,3 % und einer Viskosität (25°C, 100 %ig) von 3000 mPa*s (Bayhydur^{®} XP 7063, Bayer Corp., USA).

### Polymerpolyol 1 (Vergleichsbeispiel mit Kern-Schale-Aufbau, aber ohne Polyethernolyol)

In einem 3 1-Glasreaktor mit wirksamen Blattrührer, Gaseinlass und -auslass, einem Rückflusskühler sowie einer Temperiervorrichtung, die eine isotherme Fahrweise gewährleistet, werden 12,5 g einer 80 gewichts-%igen, wässrigen Paste eines Emulgators A (Ammoniumsalz des Monoesters eines C₁₂₋₁₈-Fettalkoholpolyethylenoxids mit einem Polymerisationsgrad von ca. 3; Emulgator 951, Bayer AG, Leverkusen, DE) und 720 g entionisiertes Wasser vorgelegt (Lösung I). Nach gründlicher Spülung des Ansatzes mit Stickstoff wird die Vorlage auf eine Temperatur von 80°C erwärmt. Währenddessen wird ein kontinuierlicher Stickstoffstrom oberhalb des Flüssigkeitspegels aufrecht erhalten. Anschließend werden die Mischung II und die Lösung III innerhalb von ca. 5 min zudosiert.

| | | |
|---|---|---|
| II. | Hydroxypropylmethacrylat: | 8,3 g |
| | Methylmethacrylat: | 30 g |
| | Styrol: | 45 g |
| | n-Butylacrylat: | 14,7 g |

| | | |
|---|---|---|
| III. | Ammoniumperoxodisulfat: | 0,3 g |
| | entionisiertes Wasser: | 17 g |

Nach einer Reaktionszeit von 30 min, in der eine sogenannte "in situ"-Saat erzeugt wird, werden die Mischung IV in 2 h und die Lösung V in 4 h unterhalb des Flüssigkeitsspiegels, also im getauchten Zustand, zudosiert.

| | | |
|---|---|---|
| IV. | Hydroxypropylmethacrylat: | 37,4 g |
| | Methylmethacrylat: | 135,1 g |
| | Styrol: | 202,6 g |
| | n-Butylacrylat: | 65,9 g |

| | | |
|---|---|---|
| V. | Ammoniumperoxodisulfat: | 3,0 g |
| | Emulgator A (s.o., 80 %ig): | 12,5 g |
| | entionisiertes Wasser: | 600 g |

Sofort nach Beendigung des Monomerstroms IV wird mit der Dosierung des Monomerstroms VI begonnen. Dieser Monomerstrom wird ebenfalls in 2 h zudosiert, so dass die Mengenströme V und VI beide gleichzeitig beendet sind.

| | | |
|---|---|---|
| VI. | Acrylsäure: | 10,0g |
| | Hydroxypropylmethacrylat: | 123,3 g |
| | Methylmethacrylat: | 34,9 g |
| | Styrol: | 52,4 g |
| | n-Butylacrylat: | 220,4 g |

Danach wird 1 h nachgerührt und anschließend mit der Lösung VII nachaktiviert.

| | | |
|---|---|---|
| VII. | Ammoniumperoxodisulfat: | 1,0 g |
| | entionisiertes Wasser: | 10,0 g |

Es wird 4 h nachgerührt, auf Raumtemperatur abgekühlt und anschließend mit der Mischung VIII neutralisiert.

| | | |
|---|---|---|
| VIII. | Ammoniak (25 %ige wässrige Lösung): | 7,5 g |
| | entionisiertes Wasser: | 10,0 g |

(berechneter Neutralisationsgrad bezogen auf die Carboxylgruppen: 79,4 %)

Anschließend wird abgelassen und filtriert.

Die physikalisch-chemischen Eigenschaften dieser Dispersion lauten:

| | |
|---|---|
| Feststoffgehalt: | 42,0 Gew.-% |
| pH-Wert: | 7,3 |
| Viskosität (23°C; D = 42s⁻¹): | < 100 mPas |
| mittlerer Teilchendurchmesser (LKS): | 91 nm |
| Säurezahl: | 7,3 mgKOH/g Dispersion |

### Polymerpolyol 2 (erfindungsgemäß)

### analog Beispiel 1, jedoch mit Zugabe eines Polyethers bei der Polymerisation der Pfropfauflage

Die Herstellung dieses Polymerpolyols erfolgte wie im Beispiel des nicht erfindungsgemäßen Polymerpolyols 1; die Zusammensetzung des Monomergemischs VI, das nach der Polymerisation die Pfropfauflage bildet, wurde folgendermaßen geändert:

| | | |
|---|---|---|
| VI. | Acrylsäure: | 10,0 g |
| | Hydroxypropylmethacrylat: | 123,3 g |
| | Methylmethacrylat: | 34;9 g |
| | Styrol: | 52,4 g |
| | n-Butylacrylat: | 170,4 g |
| | Polyether-Desmophen^{®} 550 U (Bayer AG, Leverkusen, DE): | 50,0 g |

(Polyether-Desmophen^{®} 550 U, Bayer AG, Leverkusen, DE, ist ein auf Trimethylolpropan gestartetes Polypropylenoxid mit einem durchschnittlichen Molekulargewicht Mₙ von 437 g/ mol und einer OH-Zahl von 385 mg KOH/g Festharz; der Neutralisationsgrad beträgt hier 100% bezogen auf die Carboxylgruppen).

Die physikalisch-chemischen Eigenschaften dieser Dispersion lauten:

| | |
|---|---|
| Feststoffgehalt: | 41,8 Gew.-% |
| pH-Wert: | 8,0 |
| Viskosität (Schergradient D = 45,4 s⁻¹; T = 23°C): | 14 mPa*s |
| mittlere Teilchendurchmesser (LKS): | 106 nm |
| Säurezahl: | 6,8 mg KOH / g Dispersion |
| Glastemperatur (DSC-Methode): | 11,5°C/66,0°C |
| (d. h. es sind deutlich 2 Glasübergänge erkennbar) | |

### Polymerpolyole, Beispiele 3 - 7 (erfindungsgemäß)

In einem 3 1-Glasreaktor mit einem wirksamen Blattrührer, Gaseinlass und -auslass, einem Rückflusskühler sowie einer Temperiervorrichtung, die eine isotherme Fahrweise gewährleistet, werden die Lösungen I (vgl. Tab. 1) vorgelegt und mit Stickstoff gründlich gespült. Danach wird die Vorlage I unter Rühren bei ca. 200 U/min auf eine Temperatur von 80°C erwärmt. Währenddessen wird ein kontinuierlicher Stickstoffstrom oberhalb des Flüssigkeitspegels aufrecht erhalten. Anschließend werden die Mischungen II und die Lösungen III (vgl. Tab. 1) innerhalb von ca. 5 min zur Vorlage I zudosiert.

Nach einer Reaktionszeit von 30 min werden die Mischungen IV (vgl. Tab. 1) in 2 h und die Lösungen V (vgl. Tab. 1) in 4 h im getauchten Zustand zu der in situ-Saat zudosiert.

Sofort nach der Beendigung der Monomerströme IV (vgl. Tab. 1) wird mit der Dosierung der Monomerströme VI begonnen. Diese Monomerstöme VI werden ebenfalls in 2 h zudosiert.

Danach wird 1 h nachgerührt und anschließend mit der Lösung VII (vgl. Tab.1) nachaktiviert.

Daraufhin wird 4 h nachgerührt, auf Raumtemperatur abgekühlt und anschließend mit den Mischungen VIII (vgl. Tab. 1) neutralisiert. Anschließend wird abgelassen und durch ein Polyamidtuch mit einer Maschenweite von 100 µm filtriert.

Die Dispersionen 3 - 7 weisen die in der Tabelle 1 aufgelisteten physikalisch-chemischen Kenndaten auf.

**Tabelle 1:**

| | | | | | |
|---|---|---|---|---|---|
| *Zusammensetzung und physikalisch-chemische Eigenschaften der Polyoldispersionen 3-7* | | | | | |

| | Beisp. 3 [g] | Beisp. 4 [g] | Beisp.5 [g] | Beisp. 6 [g] | Beisp. 7 [g] |
|---|---|---|---|---|---|
| Vorlage I: | | | | | |
| Emulgator A* | 5,0 | 4,0 | 2,0 | 1,0 | 1,0. |
| ention. Wasser | 720 | 720 | 720 | 720 | 720 |

| Monomermischung II (in situ-Saat): | | | | | |
|---|---|---|---|---|---|
| Hydroxypropylmethacrylat | 8,3 | 8,3 | 8,3 | 8,3 | 8,3 |
| Methylmethacrylat | 30,0 | 30,0 | 30,0 | 30,0 | 30,0 |
| Styrol | 45,0 | 45,0 | 45,0 | 45,0 | 45,0 |
| n-Butylacrylat | 14,7 | 14,7 | 14,7 | 14,7 | 14,7 |

| Initiatorlösung III (in situ-Saat): | | | | | |
|---|---|---|---|---|---|
| Ammoniumperoxodisulfat | 0,3 | 0,3 | 0,3 | 0,3 | 0,3 |
| entionisiertes Wasser | 17,0 | 17,0 | 17,0 | 17,0 | 17,0 |

| Monomerstrom IV (Zulauf): | | | | | |
|---|---|---|---|---|---|
| Hydroxypropylmethacrylat | 37,4 | 37,4 | 37,4 | 37,4 | 37,4 |
| Methylmethacrylat | 135,1 | 135,1 | 135,1 | 135,1 | 135,1 |
| Styrol | 202,6 | 202,6 | 202,6 | 202,6 | 202,6 |
| n-Butylacrylat | 65,9 | 65,9 | 65,9 | 65,9 | 65,9 |

| Initiator/Emulgatorzulauf V: | | | | | |
|---|---|---|---|---|---|
| Ammoniumperoxodisulfat | 3,0 | 3,0 | 3,0 | 3,0 | 3,0 |
| Emulgator. A * | 20,0 | 21,0 | 23,0 | 24,0 | 24,0 |
| entionisiertes Wasser | 600 | 600 | 600 | 600 | 600 |

| Monomerstrom VI (Zulauf): | | | | | |
|---|---|---|---|---|---|
| Acrylsäure | 10,0 | 20,0 | 10,0 | 10,0 | 10,0 |
| Hydroxypropylmethacrylat | 123,3 | 123,3 | 123,3 | 123,3 | 123,3 |
| Methylmethacrylat | 34,9 | 24,9 | 34,9 | 34,9 | 34,9 |
| Styrol | 52,4 | 52,4 | 52,4 | 52,4 | 52,4 |
| n-Butylacrylat | 170,4 | 170,4 | 170,4 | 170,4 | 170,4 |
| Polyether-Desmophen^{®} 550 U | 50,0 | 50,0 | | | |
| Polyether-Desmophen^{®} L 400 | | | 50,0 | | |
| Polyether-Desmophen^{®} 1600 U | | | | 50,0 | |
| Polyether-Desmophen^{®} 3600 | | | | | 50,0 |

| Nachaktivatorlösung VII: | | | | | |
|---|---|---|---|---|---|
| | | | | | |
| Ammoniumperoxodisulfat | 1,0 | 1,0 | 1,0 | 1,0 | 1,0 |
| entionisiertes Wasser | 10,0 | 10,0 | 10,0 | 10,0 | 10,0 |

| Neutralisationslösung VIII: | | | | | |
|---|---|---|---|---|---|
| Ammoniak (25 %ig wässrig) | 9,4 | 15,0 | 9,4 | 9,4 | 9,4 |
| entionisiertes Wasser | 10,0 | 10,0 | 10,0 | 10,0 | 10,0 |
| Feststoffgehalt [Gew.-%] | 42,1 | 42,3 | 42,1 | 41,8 | 42,0 |
| pH-Wert | 8,0 | 7,3 | 7,5 | 7,7 | 7,4 |
| Viskosität (23°C; D = 45,4 s⁻¹) [mPa*s] | 32 | 118 | 20 | 22 | 18 |
| mittl. Teilchendurchmesser (LKS) [nm] | 110 | 125 | 160 | 135 | 136 |
| Säurezahl [mg KOH/g Dispersion] | 7,4 | 11,6 | 6,7 | 7,4 | 7,5 |

| | | | | | |
|---|---|---|---|---|---|
| * Emulgator A siehe Vergleichsbeispiel Polymerpolyol 1 Polyether-Desmophen^{®} 550 U: Bayer AG, Lev, DE, Polypropylenoxid-Polyol mit Mₙ = 437 g/mol, Funktionalität f = 3 Polyether-Desmophen^{®} L 400: Bayer AG, Lev, DE, Polypropylenoxid-Polyol mit Mₙ = 561g/mol, OH-Zahl: 200 mg KOH/g FH (f=2) Polyether-Desmophen^{®} 1600 U: Bayer AG, Lev, DE, Polypropylenoxid-Polyol mit Mₙ = 1 000 g/mol Polyether-Desmophen^{®} 3600: Bayer AG, Lev, DE, Polypropylenoxid-Polyol mit Mₙ = 2 000 g/mol, OH-Zahl: 56 mg KOH/g FH (f=2) | | | | | |

### Polymerpolyole, Beispiele 8 und 9 (erfindungsgemäß)

### Polyetherzugabe während der Neutralisation

In einem 3 1-Glasreaktor mit einem wirksamen Blattrührer, Gaseinlass und -auslass, einem Rückflusskühler sowie einer Temperiervorrichtung, die eine isotherme Fahrweise gewährleistet, werden die Lösungen I (vgl. Tab. 3) vorgelegt und mit Stickstoff gründlich gespült. Danach wird die Vorlage I unter Rühren bei ca. 200 U/min auf eine Temperatur von 80°C erwärmt. Währenddessen wird ein kontinuierlicher Stickstoffstrom oberhalb des Flüssigkeitspegels aufrecht erhalten. Anschließend werden die Mischungen II und die Lösungen III (vgl. Tab. 3) innerhalb von ca. 5 min zur Vorlage I zudosiert.

Nach einer Reaktionszeit von 30 min werden die Mischungen IV in 2 h und die Lösungen V (vgl. Tab. 3) in 4 h gleichmäßig im getauchten Zustand in die in situ-Saat zudosiert.

Nach der Beendigung der Monomerzuläufe IV wird sofort mit der Dosierung der zweiten Monomerströme VI begonnen.

Nach der gleichzeitigen Beendigung der Zuläufe V und VI wird 1 h nachgerührt und dann mit den Lösungen VII (vgl. Tab. 3) nachaktiviert. Anschließend wird 4 h nachgerührt, dann auf Raumtemperatur abgekühlt und mit den Mischungen VIII (vgl. Tab. 3) neutralisiert.

Anschließend wird abgelassen und durch ein Polyamidfilter mit einer Maschenweite von 100 µm filtriert.

Die Dispersionen 8 und 9 weisen die in der Tabelle 3 aufgelisteten physikalisch-chemischen Kenndaten auf.

**Tabelle 2:**

| *Zusammensetzung und physikalisch-chemische Eigenschaften der Polyoldispersionen 8 und 9* | | |
|---|---|---|
| | Beispiel 8 [g] | Beispiel 9 [g] |
| Vorlage I: | | |
| Emulgator A * | 12,5 | 12,5 |
| ention. Wasser | 720 | 720 |

| Monomermischung II (in situ-Saat): | | |
|---|---|---|
| Hydroxypropylmethacrylat | 8,3 | 8,3 |
| Methylmethacrylat | 30,0 | 30,0 |
| Styrol | 45,0 | 45,0 |
| n-Butylacrylat | 14,7 | 14,7 |

| Initiatorlösung III (in situ-Saat): | | |
|---|---|---|
| Ammoniumperoxodisulfat | 0,3 | 0,3 |
| entionisiertes Wasser | 17,0 | 17,0 |

| Monomerstrom IV (Zulauf): | | |
|---|---|---|
| Hydroxypropylmethacrylat | 37,4 | 37,4 |
| Methylmethacrylat | 13 5,1 | 13 5 ,1 |
| Styrol | 202,6 | 202,6 |
| n-Butylacrylat | 65,9 | 65,9 |

| Initiator/Emulgatorstrom V (Zulauf): | | |
|---|---|---|
| Ammoniumperoxodisulfat | 3,0 | 3,0 |
| Emulgator A * | 12,5 | 12,5 |
| entionisiertes Wasser | 600 | 600 |

| Monomerstrom VI (Zulauf): | | |
|---|---|---|
| Acrylsäure | 10,0 | 10,0 |
| Hydroxypropylmethacrylat | 123,3 | 123,3 |
| Methylmethacrylat | 34,9 | 34,9 |
| Styrol | 52,4 | 52,4 |
| n-Butylacrylat | 70,4 | 20,4 |

| Nachaktivatorlösung VII: | | |
|---|---|---|
| Ammoniumperoxodisulfat | 1,0 | 1,0 |
| Entionisiertes Wasser | 10,0 | 10,0 |

| Neutralisationsgemisch VIII: | | |
|---|---|---|
| Ammoniak (25 %ig wässrig) | 9,4 | 9,4 |
| Polyether-Desmophen 550U | 150 | 200 |
| Entionisiertes Wasser | 10 | 10 |
| Feststoffgehalt [Gew.-% | 41,6 | 41,6 |
| pH-Wert | 7,0 | 7,1 |
| Viskosität (23°C; D = 45,4 s⁻¹ [mPa*s] | 10 | < 100 |
| mittl. Teilchendurchmesser (LKS) [nm] | 97 | 107 |
| Säurezahl [mg KOH/g Dispersion] | 7,0 | 6,6 |

| | | |
|---|---|---|
| *Emulgator A: Emulgator 951, Bayer AG, Lev, DE, | | |

### Polymerpolyol Bsp. 10 (Vergleichsbeispiel)

### Dispersion ohne Kern-Schale-Aufbau

In einem Glasreaktor mit wirksamen Blattrührer, Gaseinlass und -auslass, einem Rückflusskühler sowie einer Temperiervorrichtung, die eine isotherme Fahrweise gewährleistet, werden 25 g einer 80 gewichts-%igen, wässrigen Paste eines Emulgators A (Ammoniumsalz des Monoesters eines C₁₂₋₁₈-Fettalkoholpolyethylenoxids mit einem Polymerisationsgrad von ca. 3; Emulgator 951, Bayer AG, Leverkusen, DE) und 690 g entionisiertes Wasser vorgelegt (Lösung I). Nach gründlicher Spülung des Ansatzes mit Stickstoff wird die Vorlage auf eine Temperatur von 80°C erwärmt. Währenddessen wird ein kontinuierlicher Stickstoffstrom oberhalb des Flüssigkeitspegels aufrecht erhalten. Anschließend werden die Mischung II und die Lösung III innerhalb von ca. 5 min zudosiert.

| | | |
|---|---|---|
| II. | Acrylsäure | 3,0 g |
| | Hydroxypropylmethacrylat | 34,0 g |
| | Methylmethacrylat | 50,0 g |
| | n-Butylacrylat | 10,0 g |
| | α-Methylstyrol-Dimer | 1,0 g |

| | | |
|---|---|---|
| III. | Ammoniumperoxodisulfat | 0,5 g |
| | entionisiertes Wasser | 86,0 g |

Nach einer Reaktionszeit von 30 min, in der eine sogenannte "in situ"-Saat erzeugt wird, werden parallel die Mischung IV und die Lösung V in 6 h unterhalb des Flüssigkeitsspiegels, also im getauchten Zustand, zudosiert.

| | | |
|---|---|---|
| IV. | Acrylsäure | 27,0 g |
| | Hydroxypropylmethacrylat | 305,0 g |
| | Methylmethacrylat | 450,0 g |
| | n-Butylacrylat | 81,0 g |
| | α-Methylstyrol-Dimer | 19,0 g |

| | | |
|---|---|---|
| V. | Ammoniumperoxodisulfat | 3,0 g |
| | entionisiertes Wasser | 516,0 g |

Danach wird 2 h nachgerührt und anschließend mit der Lösung VII nachaktiviert.

| | | |
|---|---|---|
| VI. | Ammoniumperoxodisulfat | 0,5 g |
| | entionisiertes Wasser | 86,0 g |

Es wird 4 h nachgerührt, auf Raumtemperatur abgekühlt und anschließend mit der Mischung VII neutralisiert.

| | | |
|---|---|---|
| VII. | Ammoniak (25 %ige wässrige Lösung) | 17,0 g |
| | entionisiertes Wasser | 20,0 g |

Anschließend wird abgelassen und filtriert.

Die physikalisch-chemischen Eigenschaften dieser Dispersion lauten:

| | |
|---|---|
| Feststoffgehalt: | 43,9 Gew.-% |
| pH-Wert: | 7,0 |
| Viskosität (23°C; D = 42s⁻¹): | 150 mPas |
| mittlerer Teilchendurchmesser (LKS): | 103 nm |
| Säurezahl: | 12,0 mg KOH/g Dispersion |

### Anwendungstechnische Beispiele:

### Die Bezugsquellen der eingesetzten Komponenten sind dem Herstellerverzeichnis zu entnehmen

**Tabelle 3: Lackbindemittel für transparente Versiegelungen mit den Polyoldispersionen gemäß Beispiel 1 und 2 (erfindungsgemäß) sowie Beispiel 10 (Vergleich)**

| Rohstoff | | Zusammensetzung in Gew.-Teile | | | | | |
|---|---|---|---|---|---|---|---|
| **Komponente 1:** | | | | | | | |
| Polyoldispersion gem. Bsp. 1 | | 58,34 | 58,34 | 58,34. | -,- | -,- | |
| Polyoldispersion gem. Bsp. 2 | | -,- | -,- | -,- | 50,00 | 50,00 | |
| Polyoldispersion gem Bsp. 10 | | | | | | | 58,34 |
| Acrysol^{®} RM 8 (5 %-ig in Wasser) | (1) | 2,33 | 2,33 | 2,33 | 2,00 | 2,00 | 2,33 |
| Foamaster^{®} 306 | (2) | 0,47 | 0,47 | 0,47 | 1,00 . | 1,00 | 0,47 |
| Baysilone^{®} Lackadditive 3466 (10%-ig in Wasser) | (3) | 5,83 | 5,83 | 5,83 | 3,00 | 3,00 | 5,83 |
| Demineralisiertes Wasser | | 11,67 | 11,67 | 11,67 | 12,00 | 12,00 | 11,67 |
| Methylpropylacetat | | -;- | 4,67 | 4,67 | -,- | -,- | 4,67 |

| **Komponente 2:** | | | | | | | |
|---|---|---|---|---|---|---|---|
| Polyisocyanat 1 | | -,- | 12,02 | -,- | 10,00 | -,- | |
| Polyisocyanat 2 | | 10,07 | -,- | 10,07 | -,- | 8,6 | 20,39 |

| **Zusammensetzung** (in Gew.-%): | | | | | | | |
|---|---|---|---|---|---|---|---|
| Bindemittel | | 39,0 | 38,3 | 37,0 | 39,6 | 38,5 | 42,6 |
| Wassergehalt | | 59,7 | 55,6 | 56,8 | 58,6 | 59,7 | 51,8 |
| Lösemittelgehalt | | -;- | 4,9 | 5,0 | -;- | -,- | 4,5 |
| Additive | | 1,3 | 1,1 | 1,1 | 1,7 | 1,7 | 1,0 |

| **Beurteilungskriterien :** | | | | | | | |
|---|---|---|---|---|---|---|---|
| Lösemittelfreiheit des Lacks | | ja | nein | nein | ja | ja | nein |
| Filmoptik / Verträglichkeit | | n.i.O.* | i.O. | i.O. | i.O. | i.O. | n.i.O. |
| Wasserbeständigkeit | | n.i.O.** | n.b.** | i.O. | n.b.** | i.O. | n.i.O. |

| | | | | | | | |
|---|---|---|---|---|---|---|---|
| *) : Film heterogen, voller Stippen **): nicht bestimmt | | | | | | | |

Die Polyoldispersionen 1, 2 bzw. 10 werden im Dissolver vorgelegt und die in Tabelle 3 beschriebenen Additive sowie das demineralisierte Wasser ca. 15 Minuten bei ca. 5 m/s dispergiert. Man erhält einen Dispergieransatz mit praktisch unbegrenzter Lagerstabilität.
a) Im Fall der Polyoldispersionen gemäß Beispiel 1 und 10 muss ferner Methylpropylacetat zugegeben werden, damit ein Vermischen mit dem Polyisocyanat, 1 bzw. 2 per Hand möglich wird. Ohne Zusatz des Colösers erhält man einen heterogenen, mit Stippen übersäten Film.
   Nach Zugabe von Polyisocyanat 1 bzw. 2 erhält man einen transparenten, wasserverdünnbaren Zweikomponenten-Polyurethanlack, der sich, wie in Tabelle 3 beschrieben, zusammensetzt.
   Die verarbeitungsfertigen Ansätze enthalten ca. 5 Gew.-% Lösemittel. Die Verarbeitungszeit liegt bei ca. 1 Stunde bei 23°C.
b) Im Fall der Polyoldispersion gemäß Beispiel 2 ist das Polyisocyanat 1 bzw. 2 per Hand einmischbar. Es muss kein organischer Colöser zugesetzt werden. Man erhält einen transparenten, wasserverdünnbaren Zweikomponenten-Polyurethanlack, der sich, wie in Tabelle 3 beschrieben, zusammensetzt. Die Verarbeitungszeit beträgt ca. 1 Stunde bei 23°C

**Tabelle 4 : Matte, transparente Versiegelungen mit den Polyoldispersionen gemäß Beispielen 3, 4, 5, 6 und 7**

| Rohstoff | | Zusammensetzung in Gew.-Teile | | | | |
|---|---|---|---|---|---|---|
| **Komponente 1:** | | | | | | |
| Polyoldispersion gem. Bsp. 3 | | 59,5 | -,- | -,- | -,- | -,- |
| Polyoldispersion gem. Bsp. 4 | | -,- | 59,5 | -,- | -,- | -,- |
| Polyoldispersion gem. Bsp. 5 | | -,- | -,- | 59,5 | -,- | -,- |
| Polyoldispersion gem. Bsp. 6 | | -,- | -,- | -,- | 59,5 | -,- |
| Polyoldispersion gem. Bsp. 7 | | -,- | -,- | -,- | -,- | 59,5 |
| Drewplus^{®} T-4201 | (4) | 1,0 | 1,0 | 1,0 | 1,0 | 1,0 |
| Hydropalat^{®} 140 | (2) | 0,7 | 0,7 | 0,7 | 0,7 | 0,7 |
| Ultralube^{®} D - 818 | (5) | 4,8 | 4,8 | 4,8 | 4,8 | 4,8 |
| Wasser (demineralisiert) | | -,- | -,- | 26,8 | 26,8 | 26,8 |
| Deuteron^{®} MK | (6) | 4,9 | 4,9 | -,- | -,- | -,- |
| Ceraflour^{®} 920 | (7) | -,- | -,- | 4,4 | 4,4 | 4,4 |
| Acrysol^{®} RM 8 (5% ig in H₂O) | (1) | 2,4 | 2,4 | 1,2 | 1,2 | 1,2 |

| **Komponente 2:** | | | | | | |
|---|---|---|---|---|---|---|
| Polyisocyanat 3 | | 7,5 | 7,5 | 10,0 | 10,0 | 10,0 |

| **Zusammensetzung** (in Gew.-%): | | | | | | |
|---|---|---|---|---|---|---|
| Bindemittel | | 40,3 | 40,4 | 32,3 | 31,9 | 32,3 |
| Festkörpergehalt | | 52,4 | 52,6 | 40,9 | 40,4 | 40,8 |
| Wassergehalt | | 45,5 | 45,3 | 57,6 | 58,0 | 57,6 |
| Additive | | 2,1 | 2,1 | 1,6 | 1,6 | 1,6 |

| **Kennwerte:** | | | | | | |
|---|---|---|---|---|---|---|
| Trocknungzeit (grifffest) (bei RT in Minuten) | | 360 | 360 | - | - | - |
| Abrieb nach Taber in mg | | - | - | 46 | 53 | 52 |
| (CS 10 / 1000 Umdrehungen) | | | | | | |
| Glanz (85°) | | 12,4 | 14,1 | 15,2 | 14,3 | 15,4 |
| Pendelhärte nach König: | | 86 s | 84 s | 79 s | 73 s | 76 s |
| (nach 14 d Härtung bei RT) | | | | | | |
| Chemikalienfestigkeit: | | | | | | |
| (in Anlehnung an DIN 68861 Teil B) | | | | | | |
| Ethanol [1 h] | | i.O. | i.O. | i.O. | i.O. | i.O. |
| Wasser [9 d] | | i.0. | i.O. | i.O. | i.O. | i.O. |
| Colösergehalt des Lacks | | << 1% | << 1% | << 1% | << 1% | << 1% |

Die Polyoldispersionen (gem. Beispiel 3, 4, 5, 6 bzw. 7) werden im Dissolver vorgelegt und die in Tabelle 4 beschriebenen Additive sowie das demineralisierte Wasser ca. 15 Minuten bei ca. 5 m/s dispergiert. Man erhält einen Dispergieransatz mit praktisch unbegrenzter Lagerstabilität.

Die Lacke wurden in einer Nassschichtdicke von 100 bis 800 µm appliziert (entspricht einer Trockenschichtdicke von 40 bis 320 µm) und trocknen innerhalb von 10 bis 20 Minuten zu klebfreien Filmen auf. Der Härtungsprozess ist nach 7 bis 14 Tagen vollends abgeschlossen.

Es werden die in Tabelle 4 zusammengefassten Kennwerte bezüglich mechanischen und chemischen Eigenschaften der Lackfilme ermittelt.

**Tabelle 5: Lackbindemittel für transparente Versiegelungen mit den Polyoldispersionen gemäß Beispielen 8 und 9**

| Rohstoff | | Zusammensetzung in Gew.-Teile | |
|---|---|---|---|
| **Komponente 1:** | | | |
| Polyoldispersion gem. Bsp. 8 | | 50,0 | -,- |
| Polyoldispersion gem. Bsp. 9 | | -,- | 50,0 |
| Acrysol^{®} RM 8 (5% ig in H₂O) | (1) | 1,5 | 2,0 |
| Byk^{®} 025 | (8) | 0,7 | 0,7 |
| Byk^{®} 348 | (8) | 0,2 | 0,2 |
| Byk^{®} 380 | (8) | 0,3 | 0,3 |
| Wasser (demineralisiert) | | 15,0 | 15,0 |
| Deuteron^{®} MK | (6) | 4,0 | -,- |

| **Komponente 2:** | | | |
|---|---|---|---|
| Polyisocyanat 3 | | 8,6 | 8,5 |
| Worlee Add^{®} 575 (10 %-ig in MPA) | (9) | 0,2 | -,- |

| **Zusammensetzung** (in Gew.-%): | | | |
|---|---|---|---|
| Bindemittel | | 36,5 | 38,2 |
| Festkörpergehalt | | 41,6 | 38,3 |
| Wassergehalt | | 56,7 | 60,1 |
| Additive | | 1,7 | 1,6 |

| **Kennwert:** | | | |
|---|---|---|---|
| Pendelhärte nach König (nach 14 d Härtung bei RT) | | 99 s | 30 s |
| Colösergehalt des Lacks | | << 1 % | << 1 % |

Die Polyoldispersionen (gem. Beispiel 8 und 9) werden im Dissolver vorgelegt und die in Tabelle 5 beschriebenen Additive sowie das demineralisierte Wasser ca. 15 Minuten bei ca. 5 m/s dispergiert. Man erhält einen Dispergieransatz mit praktisch unbegrenzter Lagerstabilität.

Die Lacke wurden in einer Nassschichtdicke von 100 bis 240 µm appliziert (entspricht einer Trockenschichtdicke von 40 bis 96 µm) und trocknen innerhalb von 10 bis 20 Minuten zu klebfreien Filmen auf. Der Härtungsprozess ist nach 7 bis 14 Tagen vollends abgeschlossen.

Es werden die in Tabelle 5 zusammengefassten Kennwerte bezüglich mechanischen Eigenschaften der Lackfilme ermittelt.

### Herstellerverzeichnis:

(1) **Acrysol® RM 8**
   Rheologieadditiv
   Rohm & Haas Company
   100 Independence Mall West, Philadelphia, PA 19 10 6-23 99, USA
   Tel.: 00 1- 2 15- 5 92 - 30 00 Fax: 00 1 - 2 15 - 5 92 - 33 77
   www.rohmhaas.com
**(2) Foamaster® 306, Hydropalat 140**
   Entlüftungsadditiv, Verlaufadditiv
   Cognis GmbH
   Henkelstraße 67, 40 589 Düsseldorf, Germany
   Tel.: 00 49 (0) 21 1-79 40 0 Fax: 00 49 (0) 21 1 - 79 88 56 7
   www.cognis.com
**(3) Baysilone® Lackadditive 3466**
   Verlaufadditiv
   Borchers GmbH
   Alfred-Nobel-Straße 50, 40765 Monheim, Germany
   Tel.: 00 49 (0) 21 73 - 38 25 00 Fax: 00 49 (0) 21 73 - 38 26 99
**(4) Drewplus® T-4201**
   Entlüftungsadditiv
   Ashland Chemical
   One Drew Plaza, Boonton, N.J. 07 00 5, USA
   Tel.: 00 1-973-26 37 60 0 Fax: 00 1 - 973 - 26 33 32 3
   www.ashland.com
**(5) Ultralube® D-818 / D-865**
   Wachs
   Keim Additec
   Postfach 12 04, 55 478 Kirchberg / Hunsrück, Germany
   Tel.: 00 49 (0) 67 63 - 93 33 0 Fax: 0049 (0) 67 63 - 93 33 30
   www.keim-additec.de
**(6) Ceraflour® 920**
   Mattierungsmittel
   Byk Chemie
   Abelstraße 45, Postfach 10 02 45, 46 462 Wesel, Germany
   Tel.: 00 49 (0) 28 1 - 67 00 Fax: 00 49 (0) 28 1 - 65 73 5
   www.byk-chemie.com
**(7) Deuteron® MK**
   Mattierungsmittel
   DEUTERON GmbH
   In den Ellern 2, D-28832 Achim, Germany
   Tel.: 00 49 (0)421 - 48 32 27 Fax 00 49 (0) 4 21 - 48 36 02
   www.deuteron.com
**(8) Byk® 025, Byk® 348, Byk® 380**
   Entlüfter, Benetzungs- , Velaufadditiv
   Byk Chemie
   Abelstraße 45, Postfach 10 02 45, 46 462 Wesel, Germany
   Tel.: 00 49 (0) 28 1- 67 00 Fax: 00 49 (0) 28 1 - 65 73 5
   www.byk-chemie.com
**(9) Worlee Add® 575**
   Katalysator
   Worlée-Chemie GmbH
   Grusonstr. 22, 22113 Hamburg, Germany
   Tel. 00 49 (0) 40 - 7 33 33 -0 Fax: 00 49 (0) 40 - 7 33 33 -2 96
   worlee-chemie@ch.worlee.de

## Patentansprüche

1. Verfahren zur Herstellung wässriger Zweikomponenten-Polyurethan-Systeme, **dadurch gekennzeichnet, dass** in einem ersten Schritt eine Polyolkomponente a), aufgebaut aus einem hydrophoben Kern-Polymerisat mit einer Glastemperatur von 40° bis 100°C, auf welchem ein hydrophiles Schalen-Polymerisat mit einer Glastemperatur von -100° bis + 25°C mittels Emulsionspolymerisation in wässriger Phase aufgepfropft ist, hergestellt wird und eine hydroxylgruppenhaltige Polyetherkomponente b) vor, während oder nach der Polymersisation der Komponente a) zugegeben und anschließend in einem zweiten Schritt eine Polyisocyanatkomponente c) zugemischt wird.

2. Verfahren zur Herstellung wässriger Zweikomponenten-Polyurethan-Systeme gemäß Anspruch 1, **dadurch gekennzeichnet, dass** kein Colöser eingesetzt wird.

3. Verfahren gemäß Anspruch 1 oder 2, **dadurch gekennzeichnet, dass** die Polyolkomponente a)
A) 0 bis 7 Gew.-% Acrylsäure und/oder Methacrylsäure,
B) 5 bis 75 Gew.-% Methylmethacrylat und/oder Styrol,
C) 3 bis 40 Gew.-% eines oder mehrerer C₁₋₈-Alkylacrylate und/oder C₂₋₈-Alkylmethacrylate,
D) 2 bis 74 Gew.-% eines oder mehrerer monohydroxyfunktioneller Alkylacrylate und/oder Alkylmethacrylate,
E) 0 bis 30 Gew.-% anderer olefinisch ungesättigter Monomerer,
wobei die Summe der Komponenten 100 Gew.-% ergibt, enthält.

4. Verfahren gemäß einem oder mehreren der Ansprüche 1 bis 3, **dadurch gekennzeichnet, dass** die Polyetherkomponente b) Polypropylenoxidpolyole mit einem Molekulargewicht von 300 bis 4000 g/mol ist.

5. Verfahren gemäß einem oder mehreren der Ansprüch 1 bis 4, **dadurch gekennzeichnet, dass** die Polyisocyanatkomponente c) eine Viskosität von 5 bis 12000 mPas aufweist.

6. Verfahren gemäß einem oder mehreren der Ansprüche 1 bis 5, **dadurch gekennzeichnet, dass** die Komponenten a), b) und c) auf manuelle Weise oder durch Rührereinwirkung vermischt werden, wobei die Mengenverhältnisse so gewählt werden, dass ein NCO/OH-Äquivalentverhältniss von 0,2 : 1 bis 5 : 1 resultiert.

7. Wässrige Zweikomponenten-Polyurethan-Systeme erhältlich nach Verfahren gemäß einem oder mehreren der Ansprüche 1 bis 6.

8. Beschichtungsmittel enthaltend wässrige Zweikomponenten-Polyurethan-Systeme gemäß Anspruch 7.

9. Beschichtungsmittel gemäß Anspruch 8, **dadurch gekennzeichnet, dass** sie einen Gehalt an organischen Colösem von kleiner 2 Gew.% enthalten.

10. Verfahren zur Herstellung beschichteter Substrate, **dadurch gekennzeichnet, dass** als Beschichtungsmittel wässrige Zweikomponenten-Polyurethan-Systeme gemäß Anspruch 7 eingesetzt werden.

11. Substrate beschichtet mit Beschichtungsmitteln enthaltend wässrige Zweikomponenten-Polyurethan-Systeme gemäß Anspruch 7.

## Claims

1. Process for the preparation of aqueous two-component polyurethane systems, **characterised in that** in a first step a polyol component a) composed of a hydrophobic core polymer having a glass transition temperature of from 40° to 100°C, on which a hydrophilic shell polymer having a glass transition temperature of from -100° to +25°C has been grafted by means of emulsion polymerisation in aqueous phase, is prepared and a hydroxyl-group-containing polyether component b) is added before, during or after the polymerisation of component a), and then in a second step a polyisocyanate component c) is added.

2. Process for the preparation of aqueous two-component polyurethane systems according to claim 1, **characterised in that** a co-solvent is used.

3. Process according to claim 1 or 2, **characterised in that** the polyol component a) contains
A) from 0 to 7 wt.% acrylic acid and/or methacrylic acid,
B) from 5 to 75 wt.% methyl methacrylate and/or styrene,
C) from 3 to 40 wt.% of one or more C₁₋₈-alkyl acrylates and/or C₂₋₈-alkyl methacrylates,
D) from 2 to 74 wt.% of one or more monohydroxyfunctional alkyl acrylates and/or alkyl methacrylates,
E) from 0 to 30 wt.% of other olefinically unsaturated monomers,
the sum of the components being 100 wt.%.

4. Process according to one or more of claims 1 to 3, **characterised in that** the polyether component b) is polypropylene oxide polyols having a molecular weight of from 300 to 4000 g/mol.

5. Process according to one or more of claims 1 to 4, **characterised in that** the polyisocyanate component c) has a viscosity of from 5 to 12,000 mPas.

6. Process according to one or more of claims 1 to 5, **characterised in that** components a), b) and c) are mixed manually or by the action of a stirrer, the relative proportions being so chosen that a NCO/OH equivalent ratio of from 0.2 : 1 to 5 : 1 is obtained.

7. Aqueous two-component polyurethane systems obtainable by processes according to one or more of claims 1 to 6.

8. Coating compositions containing aqueous two-component polyurethane systems according to claim 7.

9. Coating compositions according to claim 8, **characterised in that** they have a content of organic co-solvents of less than 2 wt.%.

10. Process for the production of coated substrates, **characterised in that** aqueous two-component polyurethane systems according to claim 7 are used as coating compositions.

11. Substrates coated with coating compositions containing aqueous two-component polyurethane systems according to claim 7.

## Revendications

1. Procédé pour la préparation de compositions aqueuses de polyuréthannes à deux composants, **caractérisé en ce que**, dans un premier stade opératoire, on prépare un composant polyol a) constitué d'un polymère de noyau hydrophobe ayant une température de transition du second ordre de 40 à 100°C, sur lequel on a greffé en phase aqueuse, par polymérisation en émulsion, un polymère d'enveloppe hydrophile ayant une température de transition du second ordre de -100 à +25°C, on ajoute avant, durant ou après la polymérisation du composant a), un composant polyéther à groupes hydroxy b) puis, dans un deuxième stade opératoire, on ajoute et on mélange un composant polyisocyanate c).

2. Procédé pour la préparation de compositions aqueuses de polyuréthannes à deux composants selon la revendication 1, **caractérisé en ce que** l'on n'utilise pas de tiers-solvant.

3. Procédé selon la revendication 1 ou 2, **caractérisé en ce que** le composant polyol a) contient
A) 0 à 7 % en poids d'acide acrylique et/ou d'acide méthacrylique,
B) 5 à 75 % en poids de méthacrylate de méthyle et/ou de styrène,
C) 3 à 40 % en poids d'un ou plusieurs acrylates d'alkyle en C₁-C₈ et/ou de méthacrylates d'alkyle en C₂-C₈,
D) 2 à 74 % en poids d'un ou plusieurs acrylates d'alkyle et/ou méthacrylates d'alkyle à une fonction hydroxy,
E) 0 à 30 % en poids d'autres monomères à insaturation oléfinique,
la somme des proportions des composants représentant 100 % en poids.

4. Procédé selon une ou plusieurs des revendications 1 à 3, **caractérisé en ce que** le composant polyéther b) consiste en un polyol d'oxyde de polypropylène à un poids moléculaire de 300 à 4 000 g/mol.

5. Procédé selon une ou plusieurs des revendications 1 à 4, **caractérisé en ce que** le composant polyisocyanate c) a une viscosité de 5 à 12 000 mPa.s.

6. Procédé selon une ou plusieurs des revendications 1 à 5, **caractérisé en ce que** les composants a), b) et c) sont mélangés à la main ou sous l'action d'un agitateur, à des proportions relatives choisies en sorte que le rapport entre les équivalents de NCO et les équivalents d'OH va de 0,2:1 à 5:1.

7. Compositions aqueuses de polyuréthanne à deux composants obtenues par un procédé selon une ou plusieurs des revendications 1 à 6.

8. Produit de revêtement contenant une composition aqueuse de polyuréthanne à deux composants selon la revendication 7.

9. Produit de revêtement selon la revendication 8 **caractérisé en ce que** sa teneur en tiers-solvant organique est inférieure à 2 % en poids.

10. Procédé pour l'application de revêtement sur des supports, **caractérisé en ce que** l'on utilise en tant que produit de revêtement une composition aqueuse de polyuréthanne à deux composants selon la revendication 7.

11. Supports revêtus à l'aide de produits de revêtement contenant des compositions aqueuses de polyuréthannes à deux composants selon la revendication 7.
